**Europäisches Patentamt**

**European Patent Office**

**Office européen des brevets**

(19)

(11) Veröffentlichungsnummer: **0 109 579**
**B1**

(12) **EUROPÄISCHE PATENTSCHRIFT**

(45) Veröffentlichungstag der Patentschrift:
06.08.86

(51) Int. Cl.⁴: **A 61 C 9/00**

(21) Anmeldenummer: **83110627.3**

(22) Anmeldetag: **25.10.83**

(54) **Funktionslöffel oder Bissschablonen für die Bisslage-Registrierung bei der Herstellung von Zahnprothesen.**

(30) Priorität: **26.10.82 DE 3239528**

(43) Veröffentlichungstag der Anmeldung:
**30.05.84 Patentblatt 84/22**

(45) Bekanntmachung des Hinweises auf die Patenterteilung:
**06.08.86 Patentblatt 86/32**

(84) Benannte Vertragsstaaten:
**FR GB IT**

(56) Entgegenhaltungen:
**CH - A - 199 901**
**DE - U - 7 104 287**
**US - A - 2 176 575**
**US - A - 2 389 063**
**US - A - 2 610 402**
**US - A - 3 068 570**
**US - A - 3 083 460**

(73) Patentinhaber: **Braun, Siegfried, Keesburgstrasse 24a,
D-8700 Würzburg (DE)**

(72) Erfinder: **Braun, Siegfried, Keesburgstrasse 24a,
D-8700 Würzburg (DE)**

(74) Vertreter: **Fuchs, Richard, Kantstrasse 18,
D-8700 Würzburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf Funktionslöffel oder Bissschablonen für die Bisslage-Registrierung bei der Herstellung von Zahnprothesen, wobei an den oralen Seiten der Funktionslöffel oder Bissschablonen bogenförmige Wälle befestigt sind. Eine solche Vorrichtung ist bekannt aus US-A-2 389 063.

In der sogenannten Total-Prothetik ist es immer wieder erforderlich, aufgestellte Zahnprothesen umzustellen oder bereits fertiggestellte Zahnprothesen hinsichtlich ihrer Occlusion zu verändern. Dies ist in jedem Fall auf eine falsche «Bissnahme» zurückzuführen. Während man Modelle von voll- oder teilbezahnten Kiefern durch die Verzahnung einander zuordnen kann, muss bei unbezahnten Kiefern die Zentralrelation der Modelle mittels Funktionslöffel oder Bissschablonen neu festgelegt werden. Zu diesem Zweck werden bisher auf den Funktionslöffeln oder Bissschablonen, dem Kieferkammverlauf folgend, zum Teil vorgefertigte Wachswälle montiert, die verschiedene Konsistenzen aufweisen können. Diese Wachswälle müssen jedoch von Hand umständlich und zeitraubend dem Löffel oder der Bissschablone angepasst und an dieser durch «Anschmelzen» befestigt werden. Für die Zwecke der sogenannten Bissverschlüsselung setzt dann der behandelnde Arzt diese mit Wachswällen versehenen Funktionslöffel oder Bissschablonen in die Mundhöhle des Patienten ein und lässt diesen dann in die Wachswälle «einbeissen». Da Wachse jedoch thermisch sehr instabil sind, besteht die Gefahr, dass, zumindest bei manchen Typen, die Wachswälle bereits durch die Mundtemperatur soweit plastifiziert werden, dass sie vom Patienten häufig unbeabsichtigt und unbemerkt «verbissen» werden. Bei Wachsen härterer Konsistenz können dagegen die daraus hergestellten Wälle vom behandelnden Arzt nur umständlich in die zur Bissnahme erforderliche Konsistenz gebracht werden. Werden solche Wälle z.B. mit einem erwärmten Werkzeug weich gemacht, ergeben sich Wallabschnitte von unterschiedlicher Temperatur. Dies bedeutet, dass die Wälle der Schliessbewegung der Kiefer eines Patienten einen Widerstand entgegensetzen, der sehr leicht an den korrespondierenden Kieferhälften unterschiedlich gross sein kann. In diesem Fall kann dann beim Schliessen der Kiefer ebenso leicht eine seitliche Bewegung auftreten, die höchst unerwünscht ist. Letzteres ist auch der Fall, wenn es auf einer Kieferseite zu einer vorzeitigen Berührung kommt. Wenn die bekannten Wachswälle, die plane Berührungsflächen und über ihre gesamte Länge die gleiche Breite aufweisen, bei der Bissnahme im dorsalen Bereich an beiden Kieferseiten zu einem sogenannten Frühkontakt kommen, hat es das Christensen'sche Phänomen zur Folge. Dadurch besteht die grosse Gefahr einer exzentrischen Biss-Registrierung.

Weitere Nachteile der Funktionslöffel oder Bissschablonen mit Wachswällen bestehen darin, dass insbesondere während der warmen Jahreszeit, die Wälle auf dem Transport, beim Ausgiessen der Funktionsabdrücke oder beim Einartikulieren leicht deformiert werden können. Schliesslich ist die Montage von Registrierbestecken auf solchen Wachswällen für die Zwecke der Festlegung der sogenannten Zentralposition umständlich, zeitraubend und aufgrund der Verwendung des thermisch instabilen Materials «Wachs» nicht absolut zuverlässig.

Der Erfindung liegt die Aufgabe zugrunde, die vorstehenden Nachteile zu vermeiden und Funktionslöffel oder Bissschablonen mit einfach zu montierenden bogenförmigen Wällen für eine einwandfreie Bissnahme zur Bisslagebestimmung (Bisslage-Registrierung) zu schaffen. Die Wälle sollen ein Verbeissen, Verziehen oder Verformen bei der Bissnahme ebenso ausschliessen, wie eine Verformung beim Transport oder bei der Montage der Löffel oder Schablonen im Artikulator.

Gemäss der Erfindung wird diese Aufgabe bei Funktionslöffeln oder Bissschablonen der eingangs bezeichneten Art dadurch gelöst, dass die Wälle zahnreihenimitierend aus einem steifen Material, z.B. Kunststoff oder Metall ausgebildet sind, und dass die einander gegenüberliegenden Flächen (Kontaktflächen) der Wälle jeweils eines Paares von Funktionslöffeln oder Bissschablonen für Ober- und Unterkiefer sagittal und transversal entsprechend der Kompensationskurve sowie labial gekrümmt sind und mindestens drei korrespondierende Aussparungen zur Aufnahme begrenzter Portionen eines plastischen, aushärtenden Registriermittels für die Bissverschlüsselung aufweisen.

Diese zahnreihenimitierenden Wälle aus einem steifen Material können einem kieferorthopädischen Index folgend, als Normwälle in verschiedenen Grössen vorgefertigt und auf verschiedenste Weise einfach mit den Funktionslöffeln oder Bissschablonen verbunden werden. Wenn letztere, wie üblicherweise, aus Kunststoff bestehen, können die steifen zahnreihenimitierenden Wälle gemäss der Erfindung einfach «angeschmolzen» oder «anpolymerisiert» werden. Die erfindungsgemässen Wälle sind wesentlich schmäler als die bisher üblichen Wachswälle und ihre Breite entspricht der künstlicher Seitenzähne, so dass der Zungenraum bei der Bissnahme nicht unnötig eingeschränkt wird. Die im Seitenzahnbereich auftretende Divergenz oberer und unterer Kieferkammlinien wird durch die transversale Krümmung, d.h. durch die linguale Neigung der unteren Wälle sowie buccale Neigung der oberen Wälle ausgeglichen. Wenn sich die Wälle jeweils eines Paares von Funktionslöffeln oder Bissschablonen für Ober- und Unterkiefer berühren, greifen ihre einander gegenüberliegenden Flächen genau passend ineinander. Aufgrund dieser Formgebung der Wälle ist die Gefahr einer exzentrischen Biss-Registrierung bei der Bissnahme praktisch ausgeschlossen. (Das Christensen'sche Phänomen wird ausgeschaltet). Ein Verbeissen, Verziehen oder Verformen der erfindungsgemässen Wälle bei der Bissnahme ist ebenso vermieden. In die korrespondierenden Aussparungen in den gegenüberliegenden Flächen der Wälle jeweils zweier zusammenwirkender Funktionslöffel oder Bissschablonen werden zur Bissverschlüsselung vor der Bissnahme begrenzte Portionen eines plastischen aushärtenden Registriermittels (Kunststoffs) eingebracht, das, ohne zu schrumpfen, abbindet. Bei der Bissnahme haben die Wälle selbst keinen Kontakt, so dass störende Frühberührungen ausgeschlossen sind. Einem Abgleiten des Unterkiefers in Protrusionsrichtung oder seitlicher Richtung wird somit vorgebeugt. Die geringen Mengen plastischen sehr weichen Kunststoffes bzw. Registriermittels bilden auch keinen störenden Widerstand für die Schliessbewegung des Patienten, so dass auch keine Muskelirritationen ausgelöst werden können. Die Bisshöhe kann vor dem «Verschlüsseln» (Bissnahme) z.B. durch Distanzhalter experimentell exakt bestimmt werden. Die so fixierte Position der Funktionslöffel oder Bissschablonen kann leicht überprüft und, falls erforderlich, auch korrigiert werden. Funktionslöffel oder Bissschablonen mit den erfindungsgemäsen Wällen können ferner gefahrlos auch bei höheren Temperaturen transportiert, bearbeitet und im Artikulator montiert werden. Schliesslich erlauben die Aussparungen in den Wällen vorteilhaft auch eine einfache Placierung z.B. eines Montagestabes für einen Transferbogen zur Übertragung der Schädelbezüglichkeit des Oberkiefers in den Artikulator. Schliesslich können diese Wälle als Aufstellhilfe für die künstlichen Zähne verwendet werden.

Zweckmässig sind gemäss einer Ausgestaltung der Erfindung die Aussparungen an den Scheitelstellen der Bögen und in den Kauzentren der seitlichen Teile der Wälle vorgesehen.

Wenn gemäss noch einer weiteren Ausgestaltung der Erfindung die Aussparungen in den gegenüberliegenden Wällen jeweils zweier Funktionslöffel oder Bissschablonen für Ober- und Unterkiefer unterschiedlich markiert und/oder verschieden geformt sind, wird vorteilhaft Verwechslungen vorgebeugt.

Gemäss einer anderen Ausbildung der Erfindung sind im Frontbereich der Wälle jeweils zweier Funktionslöffel oder Bissschablonen für Ober- und Unterkiefer Markierungen zur Messung der Grössen der seitlichen Bewegungen von Ober- und Unterkiefer bei der Checkbissnahme vorgesehen. Während mit den bisher gebräuchlichen Wachs-Wällen die Checkbisstechnik in der sogenannten Totalprothetik überhaupt nicht durchführbar war, kann diese nun mit den harten bzw. steifen zahnreihenimitierenden Wällen gemäss der Erfindung gerade auch bei unbezahnten Patienten sehr einfach ausgeführt werden. Der Durchtritt der Medianebene ist im Frontbereich der zwei korrespondierenden Wälle markiert und der untere Wall weist seitlich davon im gleichen Abstand nach links und rechts je eine zusätzliche Markierung auf. Diese Markierungen ermöglichen dem behandelnden Arzt, das Ausmass der vom Patienten durchzuführenden Lateralbewegung genau festzulegen. Die Endpunkte der Lateralbewegung können dann mit Checkbissen fixiert werden, und zwar unter Zuhilfenahme von in die Aussparungen des unteren Walls eingesteckten sogenannten Bissträgern aus Kunststoff. Diese Bissträger sind der jeweiligen exzentrischen Lage des Unterkiefers angepasst.

Wenn gemäss noch einer weiteren Ausgestaltung der Erfindung an den Funktionslöffeln oder Bissschablonen für die Oberkiefer jeweils eine dünnwandige Registrierplatte befestigt ist, an welcher der zahnreihenimitierende Wall z.B. mittels Pass-Stiften lösbar angeordnet ist, und wenn ferner die Aussparungen in den Wällen an den Funktionslöffeln oder Bissschablonen für die Unterkiefer zur passenden Aufnahme eines Registrierbestecks für die Bisslagefixierung und Festlegung des Kiefer-Vertikalabstandes ausgebildet sind, kann praktisch ohne Mehraufwand mit den vorhandenen Funktionslöffeln oder Bissschablonen vorteilhaft ein intraorales Pfeilwinkelregistrat angefertigt werden. Zu diesem Zweck wird der zahnreihenimitierende Wall von der Registrierplatte am Oberkiefer-Funktionslöffel oder -Bissschablone abgenommen und in die Aussparungen des unteren Walls wird das Registrierbesteck für die Bisslagefixierungen und Festlegung des Kiefer-Vertikalabstandes eingesetzt. Durch die Entfernung des «Oberkiefer-Walls» von der Registrierplatte wird automatisch der für diese Arbeiten erforderliche Freiraum geschaffen.

Nach noch einer anderen Ausgestaltung der Erfindung weist das Registrierbesteck vorteilhaft einen T-förmigen Träger für den höhenverstellbar angeordneten Registrierstift auf, wobei der T-förmige Träger mittels seiner Endteile in die Aussparungen am Wall der Funktionslöffel oder Bissschablonen für die Unterkiefer passend einsteckbar ist. Der bei der eingangs erläuterten «Handbissnahme» verwendete Registrierkunststoff verbindet sich nicht mit den Wällen und kann daher aus den Aussparungen leicht entfernt werden. Dadurch ist es möglich, die oben erläuterte Handbissnahme und die Pfeilwinkelregistrierung zu Kontrollzwecken hintereinander durchzuführen.

Die Erfindung wird anschliessend anhand der Zeichnungen eines Ausführungsbeispiels erläutert. Es zeigen:

Figur 1 eine Schrägansicht eines zahnreihenimitierenden Walls, der zur Verbindung mit einem Oberkiefer-Funktionslöffel oder -Bissschablone bestimmt ist, jedoch in umgekehrter Lage mit einer distanziert angedeuteten Registrierplatte, an der dieser Wall aufsteckbar ist;

Figur 2 eine weitere Schrägansicht eines zahnreihenimitierenden Walls für einen Unterkiefer-Funktionslöffel oder -Bissschablone;

Figur 3 die zahnreihenimitierenden Wälle der Figuren 1 und 2 in ihrer gegenseitigen Zuordnung z.B. während der Bissnahme, jedoch ohne die tragenden Funktionslöffel oder Bissschablonen;

Figur 4 eine Schnittansicht entlang der Linie IV-IV in Figur 3;

Figur 5 eine Querschnittansicht entlang der Linie V-V in Figur 3;

Figur 6 eine Schnittansicht eines Paares von Funktionslöffeln mit montierten zahnreihenimitierenden Wällen, eingesetzt in die schematisch angedeutete Mundhöhle eines Patienten;

Figur 7 eine der Figur 6 ähnliche Schnittansicht, jedoch mit einer am Funktionslöffel für den Oberkiefer befestigten Registrierplatte, an der der zahnreihenimitierenden Wall lösbar angeordnet ist;

Figur 8 eine Schrägansicht eines Registrierbestecks neben dem zahnreihenimitierenden Wall der Figur 2, in dessen Aussparungen das Registrierbesteck passend einsteckbar ist;

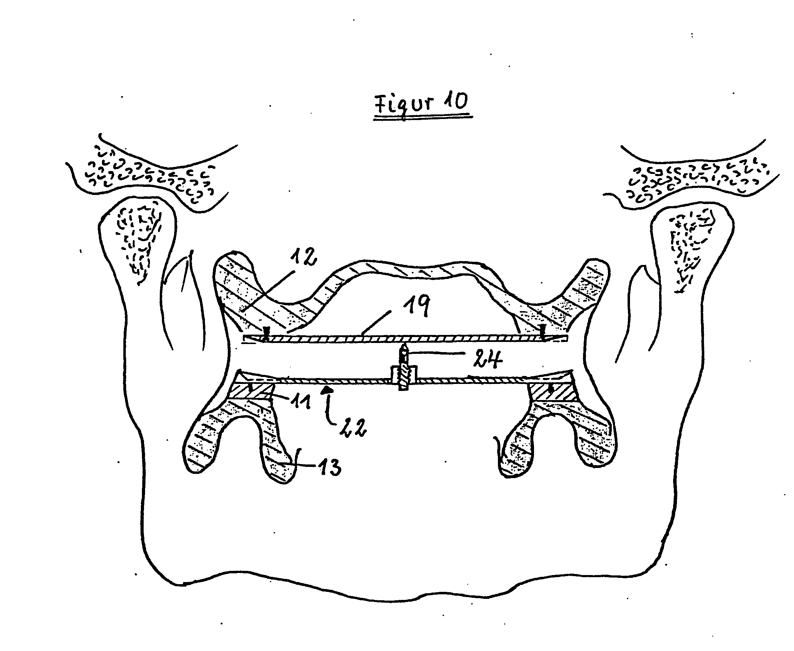

Figur 9 eine vergrösserte Schnittansicht entlang der Linie IX-IX in Figur 8, die den höhenverstellbar angeordneten Registrierstift in Verbindung mit einem abnehmbaren Bedienungsknopf zeigt und

Figur 10 eine weitere Querschnittsansicht zweier Funktionslöffel in der schematisch angedeuteten Mundhöhle eines Patienten bei der Anfertigung eines Pfeilwinkelregistrats, wobei der obere Funktionslöffel nur die Registrierplatte ohne zahnreihenimitierenden Wall trägt, während der Funktionslöffel für den Unterkiefer mit einem zahnreihenimitierenden Wall bestückt ist, der seinerseits das in Figur 8 gezeigte Registrierbesteck trägt.

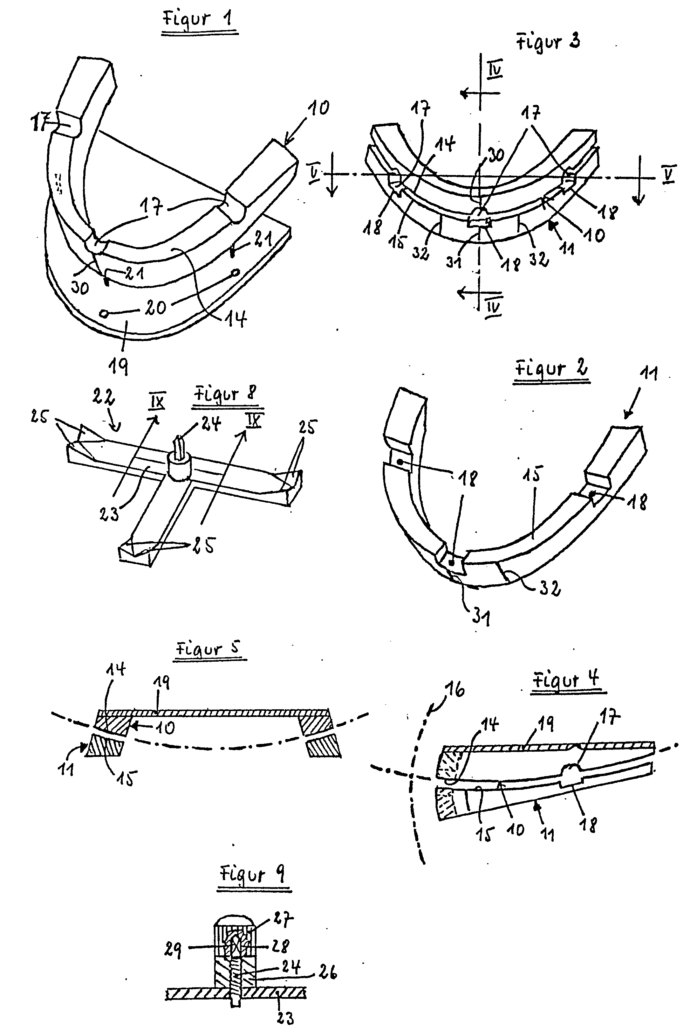

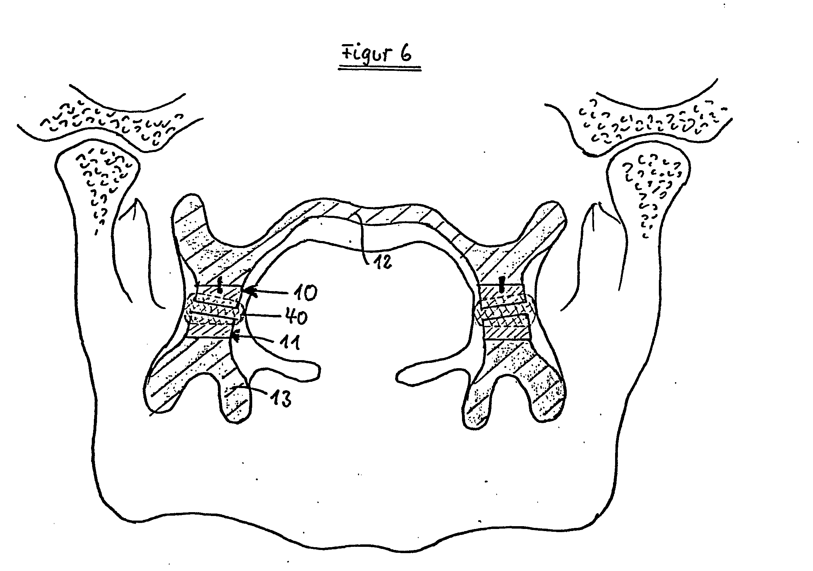

Die in den Figuren 1-5 gezeigten zahnreihenimitierenden Wälle 10 und 11 werden bevorzugt aus einem steifen bzw. zähharten Kunststoff hergestellt, können jedoch auch aus Metall bestehen. Der zahnreihenimitierende Wall 10 kann, wie in Figur 6 gezeigt ist, unmittelbar an einem Funktionslöffel 12 angeformt werden, der seinerseits gleichfalls aus Kunststoff bestehen kann. Ferner kann in gleicher Weise der zahnreihenimitierende Wall 11 an einem aus Kunststoff bestehenden Funktionslöffel 13 für den Unterkiefer angeformt werden. Alternativ ist es aber auch möglich, die Wälle 10 und 11 an ihren zugeordneten Funktionslöffeln anzuschrauben, passend aufzustecken oder anzukleben. Es sei noch bemerkt, dass diese Wälle 10, 11 jeweils dem Kieferkammverlust folgend an ihren Funktionslöffeln 12 bzw. 13 befestigt werden. Um die Wälle 10, 11 sachgemäss montieren zu können, müssen die Gipsmodelle, die zur Anfertigung der Funktionslöffel 12, 13 dienten, schon nach einer provisorischen Bissnahme einartikuliert sein. Wenn die mit ihren zahnreihenimitierenden Wällen 10, 11 bestückten Funktionslöffel 12, 13 entsprechend Figur 6 in die Mundhöhle eines Patienten eingesetzt worden sind, kann, was noch ausführlicher erläutert wird, eine sogenannte «Handbissnahme» durchgeführt werden.

Die einander gegenüberliegenden Flächen 14 und 15 der zahnreihenimitierenden Wälle 10 bzw. 11 sind sagittal (vergl. den Sagittal-Schnitt in Figur 4) und transversal (vergl. den Transversalschnitt in Figur 5) entsprechend der Kompensationskurve gekrümmt, die sich aus der sogenannten Spee- und Wilsonkurve ergibt. Diese kann unterschiedlich stark ausgeprägt sein, was durch Bereithaltung verschiedener Grössen und Formen genormter zahnreihenimitierender Wälle berücksichtigt wird. Es wird ausserdem hervorgehoben, dass die erfindungsgemässen zahnreihenimitierenden Wälle in ihrer Breite derjenigen künstlicher Seitenzähne entsprechen. Aus Figur 5 geht ferner hervor, dass zum Ausgleich der Divergenz oberer und unterer Kieferkammlinien die Fläche 15 des Walles 11 nach lingual geneigt ist und die Fläche 14 des Walls 10 entgegengesetzt nach buccal. Bei Berührung greifen die Wälle 10, 11 exakt passend ineinander. Aus Figur 4 geht ferner hervor, dass die Wälle 10 und 11 an ihrer Frontseite auch labial gewölbt sind, was durch die strichpunktierte Linie 16 in Figur 4 hervorgehoben ist.

Jeder zahnreihenimitierende Wall 10 und 11 enthält ferner an den Flächen 14 und 15 beispielsweise drei miteinander korrespondierende Aussparungen 17 bzw. 18, die zur Aufnahme begrenzter Portionen 40 eines plastischen, aushärtenden Registriermittels (Kunststoffes) bei der «Handbissnahme bzw. Bissverschlüsselung» dienen. Dieser Kunststoff bindet schrumpfungsfrei ab und ist so weich, dass er der Kiefer-Schliessbewegung eines Patienten keinen störenden Widerstand entgegensetzt. Um Verwechslungen bei der Befestigung der zahnreihenimitierenden Wälle 10 und 11 an ihren Funktionslöffeln 12 bzw. 13 zu vermeiden, sind die Aussparungen 17 abgerundet, während die Aussparungen 18 kantig ausgebildet sind. Wie die Figuren 1-3 erkennen lassen, sind die Aussparungen 17, 18 an den Scheitelstellen und Kauzentren an den seitlichen Teilen der zahnreihenimitierenden Wälle 10 und 11 vorgesehen.

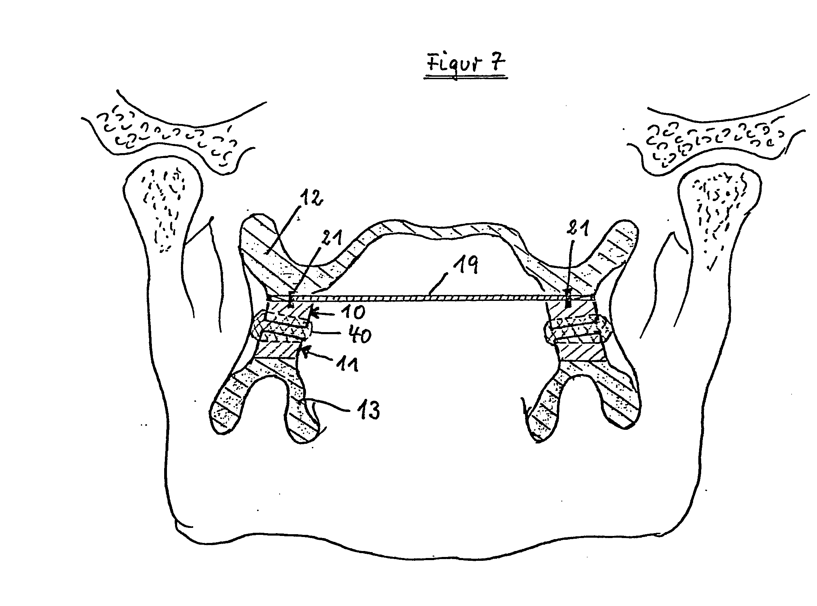

Da sich das in die Aussparungen 17, 18 für die Bisslagefixierung bzw. Bissverschlüsselung einzubringende, oben erwähnte Registriermittel (Kunststoff) nicht dauerhaft mit den Wällen 10, 11 verbindet, kann es aus den Aussparungen einfach wieder entfernt werden, wodurch es möglich ist, nach der sogenannten «Hand-Bissnahme» ein Pfeilwinkelregistrat für Kontrollzwecke durchzuführen. Für diesen Fall sieht die Erfindung vor, dass der zahnreihenimitierende Wall 10 in Abweichung vom Ausführungsbeispiel nach Figur 6 an einer dünnwandigen metallischen Registrierplatte 19 lösbar befestigt wird, die ihrerseits am Funktionslöffel 12 dauerhaft befestigt, z.B. angeschmolzen ist (Figur 7). Zur Ausführung des obigen Pfeilwinkelregistrats wird ein Freiraum zur Aufnahme des hierfür erforderlichen Registrierbestecks benötigt, der durch Abnahme des zahnreihenimitierenden Walls 10 geschaffen wird. Im Ausführungsbeispiel weist die Registrierplatte 19 drei Öffnungen 20 auf, in die am Wall 10 starr angeordnete Passstifte 21 bei der Befestigung des Walls am Funktionslöffel 12 eingreifen. Die lösbare Befestigung des Walls 10 erfolgt hier demnach beispielhaft durch eine Steckverbindung.

Zur Durchführung des oben erwähnten Pfeilwinkelregistrats wird in die Aussparungen 18 ein Registrierbesteck 22 (Figur 8) eingesteckt, das einen T-förmigen Träger 23 aufweist, an dem höhenverstellbar ein Registrierstift 24 angeordnet ist. Registrierplatte 19 und Registrierbesteck 22 müssen so montiert sein, dass bei der Durchführung des Pfeilwinkelregistrats der Registrierstift 24 senkrecht auf die Registrierplatte 19 auftrifft, die üblicherweise mit einem Aufzeichnungsanstrich versehen wird.

Die drei Enden des T-förmigen Trägers 23 sind so ausgebildet, dass sie in die Aussparungen 18 passend eingesteckt werden können, und ausserdem weisen sie nach oben zeigende Vorsprünge 25 auf, die die Verankerung der zur Bissverschlüsselung einzubringenden Gipsmenge erleichtern. Für den gleichen Zweck können auch Vertiefungen in der Registrierplatte 19 vorgesehen sein (nicht gezeigt).

Der Registrierstift 24 ist mit einem Gewindeabschnitt in eine Gewindebuchse 26 eingedreht, die ihrerseits am Träger 23 durch z.B. Lot oder Klebstoff befestigt ist. Zur Drehung und damit Höhenverstellung des Registrierstiftes 24 in der Mundhöhle des Patienten dient ein Bedienungsknopf 27, der mittels einer entsprechenden Ausnehmung 28 in passenden Eingriff mit einem Vierkantabschnitt 29 am Registrierstift 24 bringbar ist.

Die zahnreihenimitierenden Wälle 10, 11 sind ferner an ihrem Frontbereich mit Markierungslinien 30, 31, 32 versehen, die der Messung der Grössen der seitlichen Bewegungen von Ober- und Unterkiefer bei der sogenannten Checkbissnahme dienen. Der Durchtritt der Medianebene ist durch die Linien 30, 31 angedeutet und am unteren Wall 11 ist im gleichen Abstand von der Linie 31 nach links und rechts je eine Markierungslinie 32 vorgesehen. Die Endpunkte der Kiefer-Lateral-Bewegungen eines Patienten werden in üblicher Weise mit «Checkbissen» fixiert. Um zu erreichen, dass sich der Zahnersatz störungsfrei in den oralen Freiraum des Patienten einfügen lässt, ist es erforderlich, dass bei der Herstellung der Zahnprothesen die individuellen Funktionsbewegungen des Patienten im Artikulator simuliert werden. Dies bedeutet, dass die Gipsmodelle schädelbezüglich einzustellen sind und der Artikulator muss auf die patientenspezifischen Gelenkbahnwerte justiert werden. Hierfür benötigt man die o.e. Checkbisstechnik.

## Patentansprüche

1. Funktionslöffel oder Bissschablonen für die Bisslageregistrierung bei der Herstellung von Zahnprothesen, wobei an den oralen Seiten der Funktionslöffel (12, 13) oder Bissschablonen bogenförmige Wälle (10, 11) befestigt sind, dadurch gekennzeichnet, dass die Wälle (10, 11) zahnreihenimitierend aus einem steifen Material, z.B. Kunststoff oder Metall ausgebildet sind, und dass die einander gegenüberliegenden Flächen (14, 15) der Wälle (10, 11) jeweils eines Paares von Funktionslöffeln (12, 13) oder Bissschablonen für Ober- und Unterkiefer sagittal und transversal entsprechend der Kompensationskurve sowie labial gekrümmt sind und mindestens drei korrespondierende Aussparungen (17, 18) zur Aufnahme begrenzter Portionen eines plastischen, aushärtenden Registriermittels (40) für die Bissverschlüsselung aufweisen.

2. Funktionslöffel oder Bissschablonen nach Anspruch 1, dadurch gekennzeichnet, dass die Aussparungen (17, 18) an den Scheitelstellen der Bögen und in den Kauzentren der seitlichen Teile der Wälle (10, 11) vorgesehen sind.

3. Funktionslöffel oder Bissschablonen nach Anspruch 1 oder 2, dadurch gekennzeichnet, dass die Aussparungen (17, 18) in den gegenüberliegenden Wällen (10, 11) jeweils zweier Funktionslöffel (12, 13) oder Bissschablonen für Ober- und Unterkiefer unterschiedlich markiert und/oder verschieden geformt sind.

4. Funktionslöffel oder Bissschablonen nach den Ansprüchen 1-3, dadurch gekennzeichnet, dass im Frontbereich der Wälle (10, 11) jeweils zweier Funktionslöffel (12, 13) oder Bissschablonen für Ober- und Unterkiefer Markierungen (30-32) zur Messung der Grössen der seitlichen Bewegungen von Ober- und Unterkiefer bei der Checkbissnahme vorgesehen sind.

5. Funktionslöffel oder Bissschablonen nach den Ansprüchen 1-4, dadurch gekennzeichnet, dass an den Funktionslöffeln (12) oder Bissschablonen für die Oberkiefer jeweils eine dünnwandige Registrierplatte (19) befestigt ist, an welcher der zahnreihenimitierende Wall (10) z.B. mittels Pass-Stiften (21) lösbar angeordnet ist, und dass die Aussparungen (18) in den Wällen (11) an den Funktionslöffeln (13) oder Bissschablonen für die Unterkiefer zur passenden Aufnahme eines Registrierbestecks (22) für die Bisslagefixierung und Festlegung des Kiefer-Vertikalabstandes ausgebildet sind.

6. Funktionslöffel oder Bissschablonen nach Anspruch 5, dadurch gekennzeichnet, dass das Registrierbesteck (22) einen T-förmigen Träger (23) für den höhenverstellbar angeordneten Registrierstift (24) aufweist, und dass der T-förmige Träger (23) mittels seiner Endteile in die Aussparungen (18) am Wall (11) der Funktionslöffel (13) oder Bissschablonen für die Unterkiefer passend einsteckbar ist.

## Claims

1. Impression trays or bite templates for bite position registration in the production of dental prostheses, wherein arcuate wall portions (10, 11) are fixed to the oral sides of the impression trays (12, 13) or bite templates, characterised in that the wall portions (10, 11) are formed from a stiff material, for example plastics or metal, in such a way as to imitate a row of theeth, and that the mutually oppositely disposed surfaces (14, 15) of the wall portions (10, 11) of a respective pair of impression trays (12, 13) or bite templates for upper and lower jaws are curved sagittally and transversely corresponding to the compensation curve as well as labially, and have at least three corresponding recesses (17, 18) for receiving limited portions of a plastic, setting registration agent (40) for bite coding.

2. Impression trays or bite templates according to claim 1, characterised in that the recesses (17, 18) are provided at the apex locations of the arcs and in the mastication centres of the lateral parts of the wall portions (10, 11).

3. Impression trays or bite templates according to claim 1 or claim 2, characterised in that the recesses (17, 18) in the oppositely disposed wall portions (10, 11) of a respective pair of impression trays (12, 13) or bite templates, for upper and lower jaws, are marked differently and/or formed differently.

4. Impression trays or bite templates according to claims 1 to 3, characterised in that provided in the front region of the wall portions (10, 11) of a respective pair of impression trays (12, 13) or bite templates for upper and lower jaws are markings (30-32) for measuring the magnitudes of the lateral movements of the upper and lower jaws in a check bite.

5. Impression trays or bite templates according to claims 1 to 4, characterised in that secured to the respective impression trays (12) or bite templates for the upper jaws is a thin-walled registration plate (19) on which the wall portion (10) imitating a row of teeth is arranged releasably for example by means of fitting pins (21), and that the recesses (18) are provided in the wall portions (11) on the impression trays (13) or bite templates for the lower jaws for suitably accommodating a registration instrument (22) for fixing the bite position and establishing the vertical jaw spacing.

6. Impression trays or bite templates according to claim 5, characterised in that the registration instrument (22) has a T-shaped carrier (23) for the registration pin (24) which is arranged to be adjustable in respect of height, and that the T-shaped carrier (23) can be fitted by means of its end portions into the recesses (18) on the wall portion (11) of the impression trays (13) or bite templates for the lower jaws.

## Revendications

1. Porte-empreintes anatomo-fonctionnelles ou gabarits de denture pour l'enregistrement de l'occlusion pour la fabrication de prothèses dentaires, où des bourrelets (10, 11) incurvés sont fixés sur les côtés, correspondant à la cavité buccale, des porte-empreintes (12, 13) ou gabarits de denture, caractérisés en ce que les bourrelets (10, 11) imitant les rangées de dents sont réalisés en un matériau rigide, par exemple une matière plastique ou du métal, et en ce que les surfaces (14, 15) mutuellement en regard des bourrelets (10, 11) d'une paire de porte-empreintes (12, 13) ou de gabarits de denture pour la mâchoire supérieure et la mâchoire inférieure sont incurvées dans le plan sagittal et transversal de manière à correspondre à la courbe de compensation ainsi que du côté labial et présentent au moins trois encoches (17, 18) correspondantes destinées à recevoir des parties limitées d'un matériau (40) plastique et durcissable d'enregistrement des occlusions.

2. Porte-empreintes ou gabarits de denture selon la revendication 1, caractérisés en ce que les encoches (17, 18) sont prévues sur les positions des arcs faciaux déterminant la position relative avec le crâne et dans les centres de mastication des parties latérales des bourrelets (10, 11).

3. Porte-empreintes ou gabarits de denture selon la revendication 1 ou 2, caractérisés en ce que les encoches (17, 18) sont différemment marquées et/ou formées de manière différente dans les bourrelets (10, 11) en regard des deux porte-empreintes (12, 13) ou gabarits de denture correspondant pour la mâchoire supérieure et la mâchoire inférieure.

4. Porte-empreintes ou gabarits de denture selon les revendications 1 à 3, caractérisés en ce qu'on prévoit dans la zone frontale des bourrelets (10, 11) de deux porte-empreintes (12, 13) ou gabarits de denture pour la mâchoire supérieure et la mâchoire inférieure des marques (30 à 32) pour mesurer l'amplitude des mouvements latéraux des mâchoires supérieure et inférieure lors de la prise de l'occlusion de contrôle.

5. Porte-empreintes ou gabarits de denture selon les revendications 1 à 4, caractérisés en ce qu'une mince plaque (19) d'enregistrement est fixée sur les porte-empreintes (12) ou gabarits de denture pour la mâchoire supérieure, plaque sur laquelle est amoviblement montée, par exemple à l'aide de goujons (21) d'assemblage, le bourrelet (10) imitant la rangée des dents, et en ce que les encoches (18) sont formées dans les bourrelets (11) des porte-empreintes (13) ou des gabarits de denture pour mâchoire inférieure pour recevoir exactement un dispositif (22) d'enregistrement de la position d'occlusion centrée et pour déterminer la distance verticale des mâchoires.

6. Porte-empreintes ou gabarits de denture selon la revendication 5, caractérisés en ce que le dispositif (22) d'enregistrement présente un support (23) en forme de T pour la tige (24) d'enregistrement réglable en hauteur, et en ce que le support (23) en forme de T peut être introduit exactement par ses parties terminales dans les encoches (18) du bourrelet (11) des porte-empreintes (13) ou des gabarits de denture pour la mâchoire inférieure.

Figur 1

Figur 3

Figur 8

Figur 2

Figur 5

Figur 4

Figur 9

Figur 6

12

10
40
11

13

Figur 7

0 109 579

Figur 10